# EUROPÄISCHE PATENTSCHRIFT

(11) **EP 2 715 831 B1**
(45) Veröffentlichungstag und Bekanntmachung des Hinweises auf die Patenterteilung: **15.11.2017**
(21) Anmeldenummer: 12724140.4
(22) Anmeldetag: 29.05.2012
(51) Int. Cl.: H01M 2/02, H01M 2/04, H01M 10/02, H01M 10/04, H01M 10/0525, H01M 10/625, H01M 10/6554, H01M 10/613

(54) **BATTERIE ODER BATTERIEZELLENMODUL UND KRAFTFAHRZEUG**
BATTERY OR BATTERY CELL MODULE AND MOTOR VEHICLE
BATTERIE OU MODULE D'ÉLÉMENTS DE BATTERIE ET VÉHICULE À MOTEUR

(30) Priorität: 03.06.2011 DE 102011076919
(43) Veröffentlichungstag der Anmeldung: 09.04.2014
(73) Patentinhaber: Robert Bosch GmbH, 70442 Stuttgart (DE); Samsung SDI Co., Ltd., Yongin-si Gyeonggi-do 446-577 (KR)
(72) Erfinder: HAUG, Karsten, 70372 Stuttgart (DE)
(74) Vertreter: Bee, Joachim
(86) Internationale Anmeldenummer: PCT/EP2012/059963
(87) Internationale Veröffentlichungsnummer: WO 2012/163886

(56) Entgegenhaltungen:
- WO-A1-2011/012201
- WO-A2-2010/146154
- DE-A1- 19 647 593
- DE-C1- 4 420 207
- JP-A- 2003 323 869
- JP-A- 2009 245 730
- JP-A- 2009 289 448
- US-A- 3 960 599
- US-A- 4 623 599

## Beschreibung

Die vorliegende Erfindung betrifft eine Batterie oder ein Batteriezellenmodul gemäß dem Oberbegriff des Anspruchs 1. Weiterhin betrifft die vorliegende Erfindung ein Kraftfahrzeug.

Dabei ist die vorliegende Erfindung insbesondere auf Lithium-Ionen-Batterien oder entsprechende Batteriezellenmodule bezogen.

### Stand der Technik

Derartige Lithium-Ionen-Zellen umfassen üblicherweise eine Elektrode, die Lithium-Ionen im Zuge der sogenannten Interkalation reversibel einlagern kann und im Zuge der sogenannten Deinterkalation wieder auslagern kann. Die Interkalation erfolgt dabei beim Ladeprozess der Batteriezelle, und die Deinterkalation erfolgt bei der Entladung der Batteriezelle zur Stromversorgung von elektrischen Aggregaten.

Aus der DE 10 2008 015 965 A1 ist ein galvanisches Element mit Foliendichtung bekannt, welches als Energiespeicher für Chipkarten eingerichtet ist. Das galvanische Element ist eine Primärbatterie. Dieses galvanische Element umfasst lediglich zwei Elektrodenschichten, die durch einen Separator getrennt sind. Die jeweiligen Elektrodenschichten kontaktieren Kupferplatinen, die teilweise das Gehäuse des galvanischen Elementes ausbilden. Aufgrund der geringen Kapazität und der fehlenden Wiederaufladbarkeit ist das in diesem Dokument vorgestellte galvanische Element nicht zum Einsatz im automotiven Bereich geeignet. Außerdem ist der dargestellte Aufbau für die in automobilen Anwendungen üblicherweise genutzten gestapelten (sogenanntes Stack-Prinzip bei Pouch-Zellen) oder gerollten (Jelly-Roll) Elektroden mit seitlicher Kontaktierung aufgrund der rein planaren Struktur nicht anwendbar.

Aus der US 7,597,994 B2 ist eine Batterie bekannt, bei der eine im Wesentlichen herkömmliche Batteriezelle eine Umhüllung aufweist, die durch eine Ober- und eine Unterschale gebildet ist. Eine elektrische Kontaktierung der Batteriezelle kann durch Aussparungen in dieser Umhüllung erfolgen. Die Umhüllung ist aus einem nichtleitenden Material und wirkt demzufolge als ein elektrischer Isolator sowie zum Schutz gegen mechanisch hervorgerufene Beschädigungen.

US 3,960,599 A offenbart eine Knopfzelle mit Ladungssammlern, die oben oder unten an der Zelle kontaktierbar sind. JP 2003 323869 A offenbart eine Batterie mit Metallelementen unterschiedlicher Polarität, die an den Seitenflächen der Batterie kontaktierbar sind. WO 2011/012201 A1 offenbart eine Batterie in Form einer Flachzelle, die aus einem isolierendem Rahmen und zwei elektrisch leitenden Hüllblechen besteht.

Herkömmliche Lithium-Ionen-Batterien weisen oftmals Ausgestaltungen auf, die sich hinsichtlich des Herstellungsaufwandes und der damit verbundenen Herstellungskosten negativ bemerkbar machen. Bezogen auf die einzelne Batteriezelle ist dies zum Beispiel die notwendige Durchführung einer elektrischen Verbindung zwischen den Elektroden im Batteriezellengehäuse und den jeweiligen Polklemmen beziehungsweise Terminals durch das Batteriegehäuse hindurch. Dies macht es oftmals notwenig, das einteilige Batteriegehäuse gegen mindestens einen Pol einer solchen Elektroden-Terminal-Verbindung zu isolieren. Durch die feste Anordnung der Polklemmen beziehungsweise Terminals an bestimmten Seiten der Batteriezellen weisen diese eine nur geringe Flexibilität hinsichtlich der Verschaltung mehrerer Batteriezellen zu einem Batteriezellenmodul auf. Bei den Batteriezellen, bei denen das Gehäuse auf dem Potenzial eines Pols liegt, ist eine zusätzliche Isolation des Zellgehäuses zum Beispiel durch eine Lackierung oder Kunststoffummantelung zwecks Isolation bei Reihenschaltung zu realisieren.

### Offenbarung der Erfindung

Es wird erfindungsgemäß eine Batterie oder ein Batteriezellenmodul zur Verfügung gestellt, umfassend mehrere Batteriezellen, insbesondere Lithium-Ionen-Batteriezellen, jeweils umfassend: ein Gehäuse, und in dem Gehäuse wenigstens ein Elektrodenensemble, in welchem in einem Querschnitt Elektroden in mehr als zwei Schichten angeordnet sind, wobei das Gehäuse mindestens zwei das Elektrodenensemble von der Umgebung separierende Gehäuseelemente aufweist, wobei ein erstes Gehäuseelement elektrisch mit dem positiven Pol des Elektrodenensembles verbunden ist, und wobei ein zweites Gehäuseelement elektrisch mit dem negativen Pol des Elektrodenensembles verbunden ist, so dass die Batteriezelle am ersten Gehäuseelement und am zweiten Gehäuseelement elektrisch kontaktierbar ist, wobei gegenüberliegende Stirnflächen des Gehäuses entweder aus dem ersten oder dem zweiten Gehäuseelement gebildet sind, wobei Kontaktierungen zwischen dem ersten Gehäuseelement und dem positiven Pol des Elektrodenensembles sowie dem zweiten Gehäuseelement und dem negativen Pol des Elektrodenensembles an jeweils einer diesen gegenüberliegenden Stirnflächen der Batteriezelle ausgebildet sind, und gegenüberliegende Seitenflächen des Gehäuses aus dem ersten und dem zweiten Gehäuseteil ausgebildet sind, wobei das erste Gehäuseelement und das zweite Gehäuseelement jeweils halbschalenförmig ausgestaltet sind und mit ihren offenen Seiten zueinander ausgerichtet sind, wobei die Batteriezelle weiterhin ein Isolationselement umfasst, welches zwischen den Gehäuseelementen angeordnet ist, und mit welchem ein elektrischer Kurzschluss zwischen dem ersten Gehäuseelement und dem zweiten Gehäuseelement verhinderbar ist, dadurch gekennzeichnet, dass das erste Gehäuseelement einer ersten Batteriezelle an einer Seitenfläche des Gehäuses mit einem zweiten Gehäuseelement einer zweiten Batteriezelle elektrisch leitfähig verbunden ist und das zweite Gehäuseelement der ersten Batteriezelle an derselben Seitenfläche mit einem ersten Gehäuseelement einer dritten Batteriezelle elektrisch leitfähig verbunden ist.

Es können dabei ein oder mehrere Elektrodenensemble im Gehäuse angeordnet sein. Ein solches Elektrodenensemble kann zum Beispiel in Form eines sogenannten Jelly-Rolls ausgebildet sein, das heißt in einer Wickelanordnung, in der zwei Elektroden und dazwischen angeordnet ein Separator drei Lagen ausbilden, sodass bei einem Schnitt durch diesen Wickel dieser wesentlich mehr als zwei Elektrodenschichten aufweist, obwohl er lediglich zwei Elektroden umfasst. Bei einer Anordnung der Elektroden in einem sogenannten Stack ist eine Vielzahl von Elektroden wechselseitig hintereinander angeordnet, sodass ein solches Elektrodenensemble somit ebenfalls in einem Querschnitt Elektroden in mehr als zwei Schichten aufweist. Die erfindungsgemäße Batteriezelle ist dabei bevorzugt eine sogenannte Sekundärbatterie, das heißt, dass sie derart ausgestaltet ist, dass sie wiederaufladbar ist. Das erste und das zweite Gehäuseelement bilden dabei zusammen die Außenseite der Batteriezelle, über die der elektrische Kontakt mit der Batteriezelle herstellbar ist, sodass die Batteriezelle über das erste und das zweite Gehäuseelement geladen beziehungsweise entladen werden kann. Das heißt, dass die Gehäuseelemente die Terminals der Batteriezelle ausbilden. Ein wesentlicher Aspekt der vorliegenden Erfindung ist daher die Fortführung der elektrischen Isolation der beiden Pole des Elektrodenensembles auf der Gehäuseebene. Dadurch können Durchführungen der Pole beziehungsweise der Terminals vom Elektrodenensemble durch das Gehäuse in isolierter oder unisolierter Form komplett entfallen. Entsprechend geringer ist der Fertigungs- und dementsprechend auch der Kostenaufwand. Durch die Potenzialbeaufschlagung der Gehäuseelemente sind die Batteriezellen in ihrer Verschaltung zu einem Batteriezellenmodul beziehungsweise zu einer Batterie wesentlich flexibler als herkömmliche Batteriezellen, da die Batteriezellen überall an den Gehäuseelementen kontaktiert werden können. Weiter entfallen die Kosten für die elektrische Durchführung durch das Gehäuse und die dortige Isolation einer oder beider Elektroden gegen das Gehäuse. Außerdem entfallen durch die vorgenannte Ausgestaltung die bei herkömmlichen Batteriezellen notwendigen Kosten zur elektrischen Isolation der Zellgehäuse von den Elektroden oder der extra Anbindung des Gehäuses an eine Elektrode. Kühlungen der Batteriezelle sind einfach und effizient direkt an den Gehäuseelementen mit gutem Wärmeübergang zum Elektrodenensemble möglich. Hierbei ist zu beachten, dass die beiden Gehäuseelemente nicht über den Kühlkörper kurzgeschlossen werden. Das erste Gehäuseelement sowie auch das zweite Gehäuseelement ist im Wesentlichen jeweils halbschalenförmig ausgestaltet, wobei deren offene Seiten zueinander ausgerichtet sind und die Batteriezelle weiterhin wenigstens ein elektrisches Isolationselement umfasst, welches zwischen den Gehäuseelementen angeordnet ist, und mit welchem ein elektrischer Kurzschluss zwischen dem ersten Gehäuseelement und dem zweiten Gehäuseelement verhinderbar ist. Vorzugsweise sind dabei die Gehäuseelemente im Wesentlichen prismatisch ausgeführt, wobei der elektrische Kontakt zwischen dem Elektrodenensemble und der jeweiligen Gehäusehälfte bevorzugt an voneinander abgewandten Seiten des Gehäuses erfolgt also an den von den Gehäuseelementen ausgebildeten Stirnflächen des Gehäuses. Das Isolationselement kann zur sicheren Isolierung der Gehäuseelemente zwischen den Stirnseiten der offenen Seite der Gehäuseelemente in einer sogenannten Isolationsfläche angeordnet sein, wobei die Erfindung jedoch nicht auf diese Ausgestaltung eingeschränkt ist, sondern auch vorgesehen sein kann, dass die Gehäuseelemente zueinander beabstandet sind und mechanisch lediglich durch das Isolationselement überbrückt werden. Die beiden Gehäuseelemente, die als Halbschalen ausgebildet sind, können direkt als Pole beziehungsweise als Terminals genutzt werden, sodass sich vielfältige Möglichkeiten bei elektrischer Verschaltung und Kühlung der Batteriezelle ergeben, da diese zum Beispiel bei quaderförmigen Halbschalen an fünf von sechs Seiten des jeweiligen prismatischen Halbschalenquaders kontaktiert werden kann. Bei allgemeinen prismenförmigen Halbschalen mit N Seiten sind Kontaktierungen auf N-1 Flächen möglich, da lediglich die Isolationsfläche nicht kontaktiert werden kann. Mit Halbschalen sind im Sinne der Erfindung zumindest einseitig offene Hohlkörper gemeint, bei denen die offene Seite vorzugsweise in einer Ebene ausgebildet ist.

Bevorzugt ist das Isolationselement zwischen den Gehäuseelementen an den Seitenflächen angeordnet, derart dass eine Seitenfläche des Gehäuses einen Teil des ersten Gehäuseelements und einen Teil des zweiten Gehäuseelements umfasst.

In einer bevorzugten Ausgestaltungsvariante ist vorgesehen, dass das Isolationselement wenigstens bereichsweise bis auf die Innenseite zumindest eines Gehäuseelementes reicht, sodass das Isolationselement in diesem Bereich eine elektrische Isolierung zwischen dem Gehäuseelement und dem Elektrodenensemble realisiert. Das heißt, dass das bereits erwähnte Isolationselement nicht nur zur Isolierung zwischen den Gehäuseelementen dienen kann, sondern auch zur Isolierung des Gehäuses zum Elektrodenensemble und somit zur Verhinderung der Kontaktierung eines potenzialbeaufschlagten Gehäuseelementes mit dem jeweils anderen Pol des Elektrodenensembles. Vorteilhafterweise ist ein solches Isolationselement lediglich durch ein Teil ausgestaltet, sodass dessen Herstellung und Montage einfach durchführbar sind. Außerdem kann das Isolationselement das Gehäuse in weiterer günstiger Ausgestaltung das jeweilige Gehäuseelement bis auf eine oder mehrere Seitenflächen beziehungsweise Stirnflächen beziehungsweise Bereiche davon umgeben, wobei die nicht-isolierten Bereiche zur Kontaktierung des jeweiligen Gehäuseelementes dienen können. Das heißt, dass ein zur Isolation des Elektrodenensembles in der Batteriezelle dienendes Isolationselement gleichzeitig als äußerer Isolator der erfindungsgemäßen Batteriezelle dienen kann.

In weiterer vorteilhafter Ausgestaltung der erfindungsgemäßen Batteriezelle kann vorgesehen sein, dass diese an wenigstens einem Gehäuseelement dieses elektrisch kontaktierend einen Kühlkörper aufweist. Der Kühlkörper kann dabei auch die Funktion eines Zellverbinders übernehmen. Dadurch lassen sich große Leitungsquerschnitte ermöglichen sowie eine effiziente Kühlung, da die Kühlungswirkung unmittelbar an stromführenden Teilen mit einem guten Wärmeübergangsverhalten zur Zelle realisiert ist. Es wird außerdem ein Verfahren zur Herstellung einer Batteriezelle und insbesondere ein Verfahren zur Herstellung einer Lithium-Ionen-Batteriezelle beschrieben, wobei die Batteriezelle wenigstens ein Elektrodenensemble umfasst, in welchem beziehungsweise welchen in einem Querschnitt Elektroden in mehr als zwei Schichten angeordnet sind. Es ist erfindungsgemäß vorgesehen, dass das jeweilige Elektrodenensemble in ein im Wesentlichen schlauchförmiges Isolationselement eingeführt wird und ein erstes und ein zweites im Wesentlichen halbschalenförmiges Gehäuseelement an beiden offenen Stirnseiten des Isolationselementes über dieses und das Elektrodenensemble gestülpt werden und die beiden Gehäuseelemente gegeneinander elektrisch isoliert werden, sowie dass ein elektrischer Kontakt zwischen dem positiven Pol des Elektrodenensembles und dem ersten Gehäuseelement und ein elektrischer Kontakt zwischen dem negativen Pol des Elektrodenensembles und dem zweiten Gehäuseelement hergestellt wird. Das Herstellen des elektrischen Kontakts zwischen Elektrodenensemble und Gehäuseelement kann zum Beispiel von außen durch Schweißen, insbesondere an einem Überlappstoß erfolgen, sodass Dichtigkeit gewährleistet ist.

Bei Anordnung mehrerer Elektrodenensemble in einem Gehäuse können diese zusammen in ein schlauchförmiges Isolationselement eingeführt werden oder jeweils in ein schlauchförmiges Isolationselement eingeführt werden und danach, wie oben beschrieben, mit den Gehäuseelementen kontaktiert werden.

Das Einfüllen des Elektrolyts in die Batteriezelle kann dabei auf klassische Weise durch eine separate Öffnung erfolgen. Diese Öffnung kann sich im Isolationselement befinden und durch Verschweißen oder Verpressen mit einem Kunststoffstopfen einfach geschlossen werden. Gegenüber herkömmlichen Batteriezellen mit Öffnungen in Metallgehäusen ergibt sich dadurch ebenfalls ein Kostenvorteil.

Es wird weiterhin eine Batterie oder ein Batteriezellenmodul erfindungsgemäß zur Verfügung gestellt, welche beziehungsweise welches mehrere der vorgenannten Batteriezellen umfasst.

Eine solche Batterie oder ein solches Batteriezellenmodul kann derart ausgestaltet sein, dass Gehäuseelemente mehrerer Batteriezellen stoffschlüssig elektrisch leitfähig miteinander verbunden sind. Das heißt, dass zum Beispiel ein zweites Gehäuseelement einer ersten Batteriezelle mit einem ersten Gehäuseelement einer zweiten Batteriezelle zum Beispiel mittels Schweißen, Stecken oder Kleben elektrisch leitfähig verbunden ist.

In alternativer Ausführungsform ist vorgesehen, dass eine erfindungsgemäße Batterie oder ein erfindungsgemäßes Batteriezellenmodul derart ausgestaltet ist, dass Gehäuseelemente mehrerer Batteriezellen form- und/oder kraftschlüssig elektrisch leitfähig miteinander verbunden sind. Das heißt, dass diese Batteriezellen zum Beispiel geschraubt, genietet oder gesteckt sein können oder auch zum Beispiel mittels einer Feder-Nut-Verbindung miteinander verbunden sein können. Durch die Vielzahl möglicher Verbindungstechniken an einer Vielzahl von Flächen der Batteriezellengehäuse ist ein Modulaufbau sehr flexibel möglich, da halbschalenförmige Gehäuseelemente an fünf Grenzflächen miteinander verbunden und/oder dort gekühlt werden können. Dies erlaubt fast beliebige zweibeziehungsweise dreidimensionale Anordnungen. Dadurch ist eine Anpassung an unterschiedlichste Bauräume in Fahrzeugen einfach möglich. Trotz der Reduzierung der Anzahl von Einzelkomponenten einer Batteriezelle und demzufolge eines Moduls wird gleichzeitig deren Flexibilität zum Aufbau von Batteriemodulen beziehungsweise Batterien deutlich erhöht. Dadurch ergeben sich Preisvorteile bei der Konstruktion, beim Materialverbrauch, bei der Montage sowie bei der Wartung beziehungsweise beim Recycling. Dies gilt sowohl bei der Reihen- als auch bei der Parallelschaltung von Zellen.

Die Gehäuseelemente können dabei unmittelbar miteinander verbunden sein oder mittelbar miteinander verbunden sein. Bei unmittelbarer Verbindung liegen die Gehäuseelemente direkt aneinander an und kontaktieren einander direkt. Bei einer mittelbaren Verbindung ist vorgesehen, dass die Gehäuseelemente mittels eines Verbindungselementes miteinander verbunden sind, welches gegebenenfalls gleichzeitig eine Kühlfunktion aufweisen kann.

Ergänzend wird außerdem ein Kraftfahrzeug, insbesondere ein elektromotorisch angetriebenes Kraftfahrzeug, zur Verfügung gestellt, welches wenigstens eine erfindungsgemäße Batteriezelle oder eine erfindungsgemäße Batterie beziehungsweise ein erfindungsgemäßes Batteriezellenmodul aufweist.

### Zeichnungen

Ausführungsbeispiele der Erfindung werden anhand der Zeichnungen und der nachfolgenden Beschreibung näher erläutert. Es zeigen:
Figur 1 eine Batteriezelle in Schnittansicht von oben,
Figur 2 eine Schnittansicht der Batteriezelle entlang des Schnittverlaufs A-A aus Figur 1,
Figur 3 eine Schnittansicht der Batteriezelle entlang des in Figur 1 dargestellten Schnittverlaufs B-B,
Figur 4 ein erfindungsgemäßes Batteriezellenmodul mit überlappend geschweißten Batteriezellen,
Figur 5 ein Batteriezellenmodul mit hintereinander geschweißten Batteriezellen,
Figur 6 ein erfindungsgemäßes Batteriezellenmodul mit überlappend mittels winkelförmigen Elementen befestigten Batteriezellen,
Figur 7 ein erfindungsgemäßes Batteriezellenmodul mit mittels Erweiterungen des Isolationselementes überlappend geklemmten Batteriezellen,
Figur 8 übereinander angeordnete Batteriezellen, die mittels Verbindungselementen elektrisch verbunden sind,
Figur 9 in Reihen- und Parallelschaltung direkt zu einem Batteriezellenmodul angeordnete Batteriezellen, und
Figur 10 in Reihen- und Parallelschaltung angeordnete Batteriezellen, die mittels Feder-Nut-Verbindung verbunden sind.

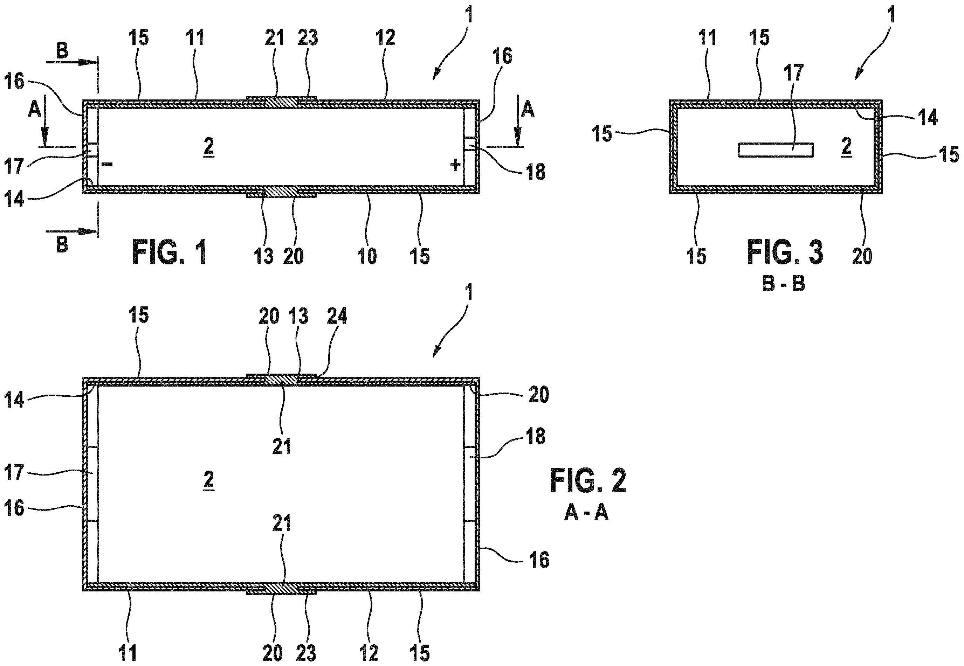

In den dargestellten Ausführungsbeispielen werden als Gehäuseelemente Halbschalen 11, 12 verwendet. Die Figuren 1 bis 3 zeigen den prinzipielle Aufbau einer Halbschalen-Batteriezelle 1. Der Aufbau wir anhand der Montagereihenfolge beschrieben.

Zunächst wird das Elektrodenensemble 2 in Form einer sogenannten Jelly-Roll oder eines Pouch-Stack durch eine der beiden Öffnungen in das als Halbschalenisolator dienende Isolationselement 20 eingeführt. Dessen Material ist vorzugsweise ein Kunststoff.

Die elektrischen Anschlüsse des Elektrodenensembles 2 liegen jeweils den offenen Seiten 13 des Isolationselementes zugewandt. Bei Bedarf kann noch ein nicht dargestelltes Anpassungselement vorhanden sein, das die Kontaktierung des Elektrodenensembles 2 an die Halbschale 11, 12 vereinfacht.

Im Idealfall erfolgt die Kontaktierung aber direkt.

Die beiden Halbschalen 11, 12 werden über das Isolationselement 20 gestülpt. Die Abdichtwirkung erfolgt entweder direkt durch die Kontaktfläche zwischen dem Kunststoff des Isolationselementes 20 und dem Metall der Halbschale 11, 12 mittels kaltem Einpressen oder durch reines Überstülpen mit späterem Erhitzen und/oder Verkleben, sodass sich auf diese Weise ein dichter Formschluss ergibt. Dadurch wird das Gehäuse 10 der Batteriezelle 1 hergestellt.

Die beiden Halbschalen 11, 12 haben vorzugsweise auf den ihrer jeweiligen geöffneten Seite gegenüberliegenden Stirnflächen 16 Aussparungen oder zumindest Führungen, die eine genaue Positionierung der Kontaktierungszone des Elektrodenensembles 2 ermöglichen. Die Kontaktierungen 17, 18 erfolgen durch Verschweißen oder andere klassische Verbindungstechniken wie zum Beispiel Löten, Stecken, leitfähiges Kleben u.a. Auch ein direktes Durchschweißen ist möglich. Dies hat den Vorteil, dass keinerlei Dichtigkeitsprobleme zu erwarten sind. Nach diesem Schritt liegt die jeweilige Halbschale 11, 12 elektrisch auf dem Potential der mit ihr elektrisch leitfähig verbundenen Elektrode, die mit dem jeweiligen Plus-Zeichen beziehungsweise Minus-Zeichen angedeutet ist.

Das Einfüllen des Elektrolyts in die Batteriezelle 1 kann auf klassische Weise durch eine separate Öffnung erfolgen. Diese kann sich im Isolationselement 20 befinden und kann durch Verschweißen/Verpressen mit einem Kunststoffstopfen einfach geschlossen werden. Gegenüber herkömmlichen Batteriezellen wird dadurch die Montage erleichtert und demzufolge kostengünstiger gestaltet.

Das Isolationselement 20 kann aus einem elektrisch nicht leitenden Material gefertigt sein, wie zum Beispiel aus einem Kunststoff mit hohem Wasser- und Gasundurchlässigkeitsfaktor. Hierzu können spezielle Sperrfolien in den Kunststoff eingebracht sein oder diesen beschichten.

Das Isolationselement 20 sorgt für eine hochohmige Trennung der beiden Halbschalen 11, 12. Es kann dabei bis auf die Außenseiten der Halbschalen 11, 12 geführt sein, wo es im Bereich einer Fügezone 24 gegebenenfalls durch eine Außenklemmung 23 mittels eines Form- und/oder Kraftschlusses mit den Halbschalen 11, 12 und zwischen den Halbschalen 11, 12 eine mechanische Verbindung herstellt und gleichzeitig eine Abdichtfunktion übernehmen kann. Dieser Bestandteil des Isolationselementes 20 kann als Isolationsbrücke 21 bezeichnet werden.

Bei verklebten Verbindungen zwischen Halbschale 11, 12 und Isolationselement 20 kann der Form- und/oder Kraftschluss entfallen.

Die Abdichtung erfolgt dann direkt gegen die Isolationsbrücke 21. In einer Variante, die eine Isolation der Flächen der Halbschalen 11, 12 benötigt, kann das Isolationselement 20 die jeweilige Halbschale 11, 12 außen und/oder innen bedecken. Es sind dann alle Flächen der Batteriezelle 1 bis auf die das Elektrodenensemble 2 kontaktierenden Flächen isoliert. Alternativ können verschiedene Außengeometrien oder Aussparungen beliebiger Form zur Kontaktierung vorhanden sein.

Die Halbschalen 11, 12 bestehen bevorzugt aus einer geeigneten Aluminiumbeziehungsweise Kupferlegierung oder Edelstahl oder anderen leitfähigen Materialien mit Korrosions-Resistenz gegen den Elektrolyten.

In einer ersten Ausführungsvariante bestehen beide Halbschalen 11, 12 aus einer Aluminiumlegierung. Dies ergibt Vorteile bei der späteren Verschaltung der Batteriezellen 1 zu Modulen 100, da keine unterschiedlichen Materialien verbunden werden müssen. Eine Halbschale kann dabei an ihrer Innenseite mit Kupfer beschichtet sein oder zweilagig aus einer Kupfer-Aluminiumlegierung aufgebaut sein, um Kontaktkorrosion am Übergang zwischen dem kupferhaltigen Elektrodenensemble und einem halbschalenförmigen Gehäuseelement zu verhindern.

Die elektrische Verbindung zwischen der Halbschale 11, 12 aus einer Aluminiumlegierung und dem Elektrodenensemble 2 auf Kupferbasis sollte allerdings möglichst nicht vom Elektrolyten benetzt sein. Hierzu ist die Durchführung der kupferförmigen Kontaktierung durch die Halbschale 11, 12 elektrolytdicht zu gestalten, zum Beispiel mittels Pressung beziehungsweise Abdichtelementen, sodass die elektrische Kontaktierung durch Verschweißen komplett an der Außenseite der Halbschale erfolgen kann.

In einer zweiten Ausführungsvariante besteht eine erste Halbschale 11 aus einer Kupferlegierung, bevorzugt an der Anodenseite. An der Kathodenseite besteht eine zweite Halbschale 12 aus einer Aluminiumlegierung. Hierdurch besteht keine Gefahr von Kontaktkorrosion an der Kontaktierungsstelle.

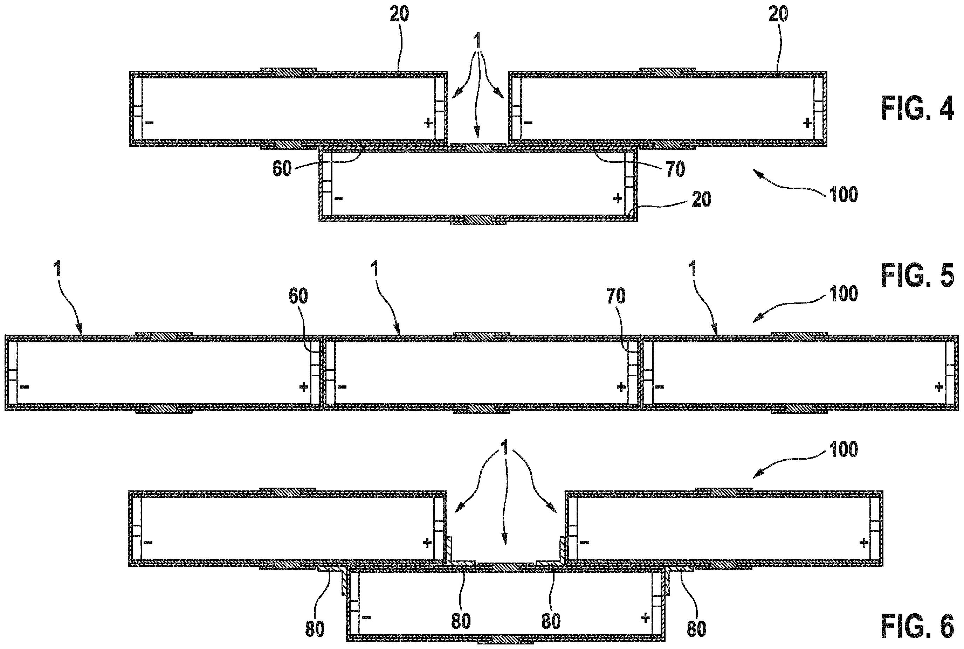

Figuren 4 bis 8 zeigen mögliche Zusammenbauvarianten der Batteriezellen 1 zu Batteriezellenmodulen beziehungsweise zu Batterien 100.

Figuren 4 und 5 zeigen dabei kostengünstige serielle Verschaltungen. Die einzelnen Batteriezellen 1 werden direkt kontaktiert, das heißt, es werden keine weiteren Elemente wie Zellverbinder, Kabel etc. zwischen den Batteriezellen 1 benötigt. Statt dessen werden die Halbschalen 11, 12 direkt miteinander verschweißt, zum Beispiel mit Schweißnähten 60 direkt an einer der Seitenflächen 15 oder an der Stirnfläche 16 der jeweiligen Halbschale 11, 12. Der Übergangwiderstand zwischen den Zellen 1 kann durch Leitpaste o.ä. verbessert werden. Alternativ kann eine direkte Verbindung über elektrisch leitfähigen Klebstoff an einer Klebestelle 70 erfolgen.

Figur 6 zeigt eine Verbindungsvariante mittels mechanischer Verbindungselemente. Hier werden die Batteriezellen über winkelförmige Elemente 80 verschraubt oder vernietet. Die Batteriezelle 1 selbst weist dabei mechanische Elemente wie Stehbolzen oder eingelassene Muttern/Gewinde auf. Diese sind vorzugsweise in die Halbschalen 11, 12 integriert. Alternativ sind die winkelförmigen Elemente 80 auf einer Seite bereits angeschweißt. Der Vorteil dieser Ausführungsvariante liegt in der leichten Demontierbarkeit im Reparatur- oder Recyclingfall.

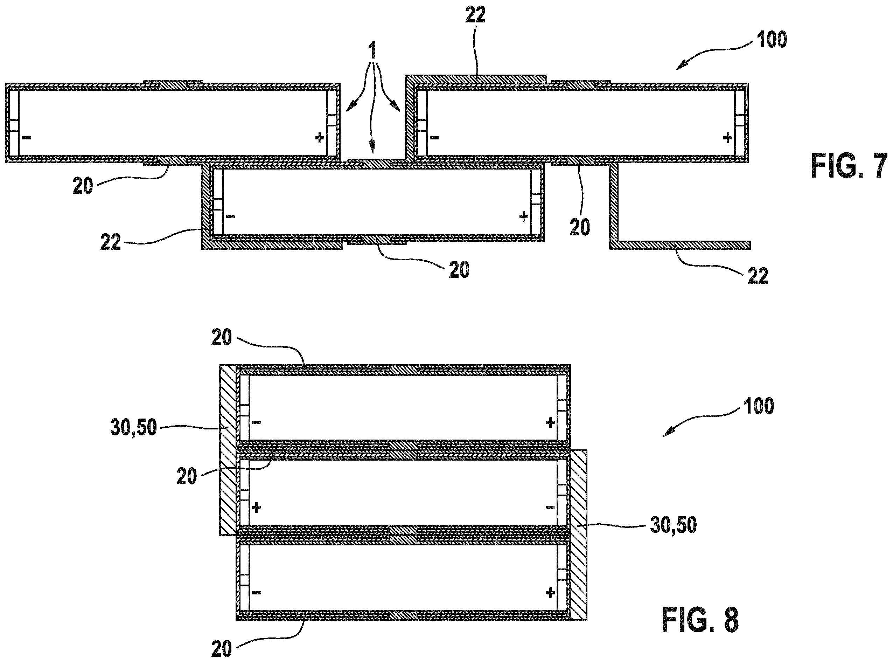

Figur 7 zeigt eine gesteckte Verbindungsvariante. Hier ist das Isolationselement 20 zwischen den Halbschalen 11, 12 so erweitert, dass die nächste Batteriezelle 1 beziehungsweise deren Halbschale 11, 12 direkt eingesteckt werden kann. Einrastmechanismen, die ein ungewolltes Lösen verhindern, sind zwar nicht dargestellt, können aber zur Fixierung der Batteriezellen 1 aneinander vorhanden sein. Die dargestellte Erweiterung 22 des Isolationselementes 20 kann vollständig in dieses integriert sein oder an dieses angeflanscht sein, zum Beispiel mittels einer Schraub-, Rast- oder sonstigen mechanischen Verbindung. Neben der Fixierung der Batteriezellen 1 aneinander übernimmt das Isolationselement 20 auch eine bereichsweise Isolierung des dadurch hergestellten Moduls 100 nach außen.

Figur 8 zeigt eine Variante mit vollständig isolierten Seitenflächen 15. Hierdurch können die Batteriezellen 1 ohne weitere Isolierung zur Umgebung bündig gestapelt werden. Die Zellverbindung erfolgt durch einheitliche, zum Beispiel geschweißte oder geschraubte Verbindungselemente 50 an unisolierten Stirnflächen 16, das heißt, an der jeweiligen Fläche einer Halbschale 11, 12, die ihrer offenen Seite gegenüberliegt. Die Verbindungselemente 50 können gleichzeitig als Kühlkörper 30 dienen.

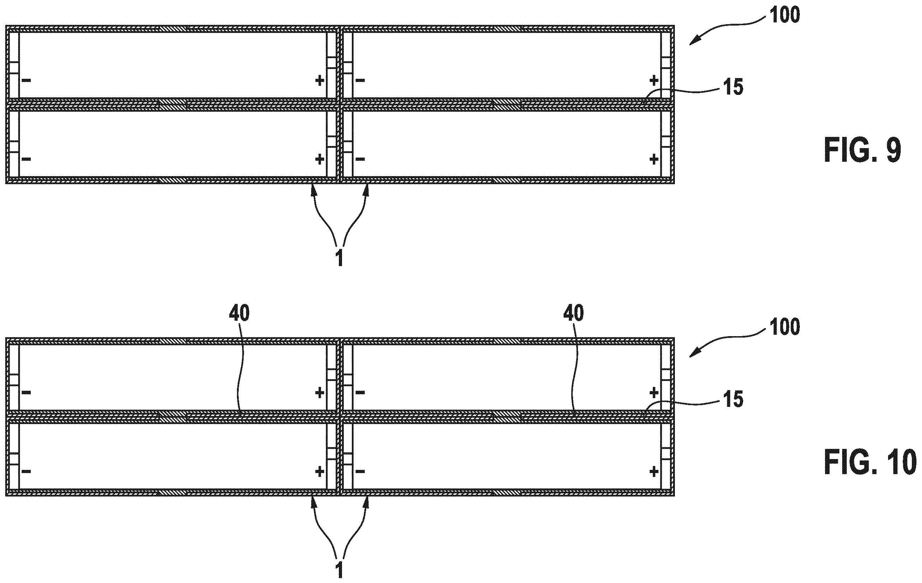

Figuren 9 und 10 zeigen kostengünstige parallel-serielle Verschaltungen.

In Figur 9 werden die Batteriezellen 1, wie in Figuren 4 bis 6 gezeigt, direkt über ihre Seitenflächen 15 miteinander verbunden.

In Figur 10 wird eine Steckverbindung genutzt, die im Detail nicht eingezeichnet ist. Es kann dabei eine auf Formschluss beruhende Bauteilverbindung genutzt werden, wie zum Beispiel eine Feder-Nut-Verbindung 40. Dabei können im Isolationselement einer Batteriezelle 1 Nuten eingelassen sein, die mit entsprechend komplementär geformten Federn einer weiteren Batteriezelle 1 verbunden werden.

Die Kontaktierungen zwischen den Batteriezellen 1 können ebenfalls nut- und federförmig ausgeführt sein, zum Beispiel als aufgeschweißte Nutschienen beziehungsweise als aufgeschweißte Federn. Die Nuten beziehungsweise Federn an den Halbschalen können prinzipiell auf jeder Halbschalenfläche vorgesehen werden, sodass die Parallelschaltung an allen vier Seitenflächen 15 erfolgen kann.

Insgesamt ist aus den dargestellten Figuren ersichtlich, dass die äußere Isolation einer Batteriezelle 1 deren Stirnflächen 16 und/oder wenigstens eine der Seitenflächen 15 bedecken kann, wobei immer ein Teil der potentialbeaufschlagten Halbschale 11, 12 zur elektrischen Kontaktierung unisoliert bleiben muss.

## Patentansprüche

1. Batterie oder Batteriezellenmodul, umfassend mehrere Batteriezellen (1), insbesondere Lithium-Ionen-Batteriezellen (1), jeweils umfassend:
ein Gehäuse (10), und in dem Gehäuse (10)
wenigstens ein Elektrodenensemble (2), in welchem in einem Querschnitt Elektroden in mehr als zwei Schichten angeordnet sind, wobei das Gehäuse (10) mindestens zwei das Elektrodenensemble (2) von der Umgebung separierende Gehäuseelemente (11, 12) aufweist, wobei
ein erstes Gehäuseelement (11) elektrisch mit dem positiven Pol des Elektrodenensembles (2) verbunden ist, und wobei
ein zweites Gehäuseelement (12) elektrisch mit dem negativen Pol des Elektrodenensembles (2) verbunden ist,
so dass die Batteriezelle (1) am ersten Gehäuseelement (11) und am zweiten Gehäuseelement (12) elektrisch kontaktierbar ist, wobei
gegenüberliegende Stirnflächen (16) des Gehäuses (10) entweder aus dem ersten oder dem zweiten Gehäuseelement (11, 12) gebildet sind, wobei Kontaktierungen (17, 18) zwischen dem ersten Gehäuseelement (11) und dem positiven Pol des Elektrodenensembles (2) sowie dem zweiten Gehäuseelement (12) und dem negativen Pol des Elektrodenensembles (2) an jeweils einer diesen gegenüberliegenden Stirnflächen (16) der Batteriezelle ausgebildet sind, und gegenüberliegende Seitenflächen (15) des Gehäuses (10) aus dem ersten und dem zweiten Gehäuseteil (11, 12) ausgebildet sind, wobei
das erste Gehäuseelement (11) und das zweite Gehäuseelement (12) jeweils halbschalenförmig ausgestaltet sind und mit ihren offenen Seiten (13) zueinander ausgerichtet sind, wobei
die Batteriezelle (1) weiterhin ein Isolationselement (20) umfasst, welches zwischen den Gehäuseelementen (11, 12) angeordnet ist, und mit welchem ein elektrischer Kurzschluss zwischen dem ersten Gehäuseelement (11) und dem zweiten Gehäuseelement (12) verhinderbar ist, **dadurch gekennzeichnet, dass** das erste Gehäuseelement (11) einer ersten Batteriezelle (1) an einer Seitenfläche (15) des Gehäuses (15) mit einem zweiten Gehäuseelement (12) einer zweiten Batteriezelle (1) elektrisch leitfähig verbunden ist und das zweite Gehäuseelement (12) der ersten Batteriezelle (1) an derselben Seitenfläche (15) mit einem ersten Gehäuseelement (11) einer dritten Batteriezelle (1) elektrisch leitfähig verbunden ist.

2. Batterie oder Batteriezellenmodul nach dem vorhergehenden Anspruch, **dadurch gekennzeichnet, dass** das Isolationselement (20) weiterhin in der Art bis auf die direkt zu dem Elektrodenensemble (2) benachbart angeordneten Innenseiten (14) der Seitenflächen (15) der zwei Gehäuseelemente (11, 12) reicht, so dass das Isolationselement (20) über die gesamte Seitenfläche (15) hinweg eine elektrische Isolierung zwischen dem jeweiligen Gehäuseelement (11, 12) und dem Elektrodenensemble (2) realisiert.

3. Batterie oder Batteriezellenmodul nach einem der vorhergehenden Ansprüche, **dadurch gekennzeichnet, dass** das Isolationselement (20) zwischen den Gehäuseelementen (11, 12) an den Seitenflächen (15) angeordnet ist, derart dass eine Seitenfläche (15) des Gehäuses (10) einen Teil des ersten Gehäuseelements (11) und einen Teil des zweiten Gehäuseelements (12) umfasst.

4. Batterie oder Batteriezellenmodul nach einem der vorhergehenden Ansprüche, **dadurch gekennzeichnet, dass** eine Batteriezelle (1) an wenigstens einem Gehäuseelement (11, 12) dieses elektrisch kontaktierend einen Kühlkörper (30) aufweist.

5. Batterie oder Batteriezellenmodul nach einem der vorhergehenden Ansprüche, **dadurch gekennzeichnet, dass** Gehäuseelemente (11, 12) mehrerer Batteriezellen (1) stoffschlüssig elektrisch leitfähig miteinander verbunden sind.

6. Batterie oder Batteriezellenmodul nach einem der vorhergehenden Ansprüche, **dadurch gekennzeichnet, dass** Gehäuseelemente (11, 12) mehrerer Batteriezellen (1) form- und/oder kraftschlüssig elektrisch leitfähig miteinander verbunden sind.

7. Batterie oder Batteriezellenmodul nach einem der vorhergehenden Ansprüche , **dadurch gekennzeichnet, dass** die Gehäuseelemente (11, 12)
i) unmittelbar miteinander verbunden sind; oder
ii) mittelbar miteinander verbunden sind.

8. Kraftfahrzeug, insbesondere elektromotorisch angetriebenes Kraftfahrzeug, umfassend wenigstens eine Batterie beziehungsweise ein Batteriezellenmodul (100) nach einem der Ansprüche 1 bis 7.

## Claims

1. Battery or battery cell module, comprising a number of battery cells (1), in particular lithium-ion battery cells (1), comprising in each case:
a housing (10) and, in the housing (10),
at least one electrode assembly (2), in which electrodes are arranged in more than two layers in a cross section, the housing (10) having at least two housing elements (11, 12) that separate the electrode assembly (2) from the surroundings, wherein
a first housing element (11) is electrically connected to the positive pole of the electrode assembly (2), and wherein
a second housing element (12) is electrically connected to the negative pole of the electrode assembly (2),
so that the battery cell (1) can be electrically contacted on the first housing element (11) and on the second housing element (12), wherein
opposite end faces (16) of the housing (10) are formed either by the first or the second housing element (11, 12), wherein contacts (17, 18) between the first housing element (11) and the positive pole of the electrode assembly (2) and beween the second housing element (12) and the negative pole of the electrode assembly (2) are formed respectively on one of these opposite end faces (16) of the battery cell, and opposite side faces (15) of the housing (10) are formed by the first and the second housing part (11, 12), wherein
the first housing element (11) and the second housing element (12) are respectively designed in the form of a half-shell and are aligned with their open sides (13) in relation to one another,
the battery cell (1) also comprising an insulating element (20), which is arranged between the housing elements (11, 12), and with which an electrical short-circuit between the first housing element (11) and the second housing element (12) can be prevented, **characterized in that** the first housing element (11) of a first battery cell (1) on a side face (15) of the housing (15) is connected in an electrically conductive manner to a second housing element (12) of a second battery cell (1) and the second housing element (12) of the first battery cell (1) on the same side face (15) is connected in an electrically conductive manner to a first housing element (11) of a third battery cell (1).

2. Battery or battery cell module according to the preceding claim, **characterized in that** the insulating element (20) furthermore reaches in such a way as far as the inner sides (14) of the side faces (15) of the two housing elements (11, 12) arranged directly alongside the electrode assembly (2) that the insulating element (20) provides an electrical insulation between the respective housing element (11, 12) and the electrode assembly (2) over the entire side face (15).

3. Battery or battery cell module according to one of the preceding claims, **characterized in that** the insulating element (20) is arranged between the housing elements (11, 12) on the side faces (15) in such a way that a side face (15) of the housing (10) comprises part of the first housing element (11) and part of the second housing element (12).

4. Battery or battery cell module according to one of the preceding claims, **characterized in that** a battery cell (1) has on at least one housing element (11, 12) a heat sink (30) that electrically contacts said element.

5. Battery or battery cell module according to one of the preceding claims, **characterized in that** housing elements (11, 12) of a number of battery cells (1) are connected to one another in an electrically conductive manner by a material bond.

6. Battery or battery cell module according to one of the preceding claims, **characterized in that** housing elements (11, 12) of a number of battery cells (1) are connected to one another in an electrically conductive manner by a positive and/or nonpositive connection.

7. Battery or battery cell module according to one of the preceding claims, **characterized in that** the housing elements (11, 12)
i) are connected to one another directly; or
ii) are connected to one another indirectly.

8. Motor vehicle, in particular an electromotively driven motor vehicle, comprising at least one battery or a battery cell module (100) according to one of Claims 1 to 7.

## Revendications

1. Batterie ou module de cellules de batterie, comprenant plusieurs cellules de batterie (1), notamment des cellules de batterie aux ions de lithium (1), comprenant respectivement un boîtier (10) et, dans le boîtier (10),
au moins un ensemble d'électrodes (2) dans lequel des électrodes sont disposées dans une section transversale en plus de deux couches, le boîtier (10) possédant au moins deux éléments de boîtier (11, 12) qui séparent l'ensemble d'électrodes (2) de l'environnement,
un premier élément de boîtier (11) étant relié électriquement au pôle positif de l'ensemble d'électrodes (2) et
un deuxième élément de boîtier (12) étant relié électriquement au pôle négatif de l'ensemble d'électrodes (2),
de sorte qu'un contact électrique peut être établi avec la cellule de batterie (1) au niveau du premier élément de boîtier (11) et au niveau du deuxième élément de boîtier (12),
des surfaces frontales (16) opposées du boîtier (10) étant formées soit sur le premier, soit sur le deuxième élément de boîtier (11, 12),
des mises en contact (17, 18) entre le premier élément de boîtier (11) et le pôle positif de l'ensemble d'électrodes (2) ainsi qu'entre le deuxième élément de boîtier (12) et le pôle négatif de l'ensemble d'électrodes (2) étant respectivement formées au niveau de l'une de ces surfaces frontales (16) opposées de la cellule de batterie, et des surfaces latérales (15) opposées du boîtier (10) étant formées à partir de la première et de la deuxième partie de boîtier (11, 12),
le premier élément de boîtier (11) et le deuxième élément de boîtier (12) étant respectivement configurés en demi-coque et orientés l'un vers l'autre avec leurs côtés ouverts (13),
la cellule de batterie (1) comprenant en outre un élément d'isolation (20) qui est disposé entre les éléments de boîtier (11, 12) et avec lequel peut être empêché un court-circuit électrique entre le premier élément de boîtier (11) et le deuxième élément de boîtier (12), caractérisé(e) en ce que le premier élément de boîtier (11) d'une première cellule de batterie (1) est relié de manière électriquement conductrice au niveau d'une surface latérale (15) du boîtier (15) avec un deuxième élément de boîtier (12) d'une deuxième cellule de batterie (1) et le deuxième élément de boîtier (12) de la première cellule de batterie (1) est relié de manière électriquement conductrice au niveau de la même surface latérale (15) avec un premier élément de boîtier (11) d'une troisième cellule de batterie (1).

2. Batterie ou module de cellules de batterie selon la revendication précédente, caractérisé(e) en ce que l'élément d'isolation (20) s'étend en outre de cette manière jusqu'aux côtés intérieurs (14) des surfaces latérales (15) des deux éléments de boîtier (11, 12) qui sont disposés directement adjacents à l'ensemble d'électrodes (2), de sorte que l'élément d'isolation (20) réalise une isolation électrique entre l'élément de boîtier (11, 12) respectif et l'ensemble d'électrodes (2) sur la totalité de la surface latérale (15).

3. Batterie ou module de cellules de batterie selon l'une des revendications précédentes, caractérisé(e) en ce que l'élément d'isolation (20) est disposé entre les éléments de boîtier (11, 12) sur les surfaces latérales (15) de telle sorte qu'une surface latérale (15) du boîtier (10) comprend une partie du premier élément de boîtier (11) et une partie du deuxième élément de boîtier (12).

4. Batterie ou module de cellules de batterie selon l'une des revendications précédentes, caractérisé(e) en ce qu'une cellule de batterie (1) possède, au niveau d'au moins un élément de boîtier (11, 12), un radiateur (30) en contact électrique avec celui-ci.

5. Batterie ou module de cellules de batterie selon l'une des revendications précédentes, caractérisé (e) en ce que les éléments de boîtier (11, 12) de plusieurs cellules de batterie (1) sont reliés électriquement entre eux par liaison de matières.

6. Batterie ou module de cellules de batterie selon l'une des revendications précédentes, caractérisé (e) en ce que les éléments de boîtier (11, 12) de plusieurs cellules de batterie (1) sont reliés électriquement entre eux par complémentarité de formes et/ou par force.

7. Batterie ou module de cellules de batterie selon l'une des revendications précédentes, caractérisé (e) en ce que les éléments de boîtier (11, 12)
i) sont reliés directement entre eux ; ou
ii) sont reliés indirectement entre eux.

8. Véhicule automobile, notamment véhicule automobile à entraînement électromotorisé, comprenant au moins une batterie ou un module de cellules de batterie (100) selon l'une des revendications 1 à 7.
